# EUROPÄISCHE PATENTSCHRIFT

(11) **EP 3 235 631 B1**
(45) Veröffentlichungstag und Bekanntmachung des Hinweises auf die Patenterteilung: **06.11.2019**
(21) Anmeldenummer: 17159986.3
(22) Anmeldetag: 09.03.2017
(51) Int. Cl.: B29C 67/00, B22F 3/105, B33Y 30/00, B33Y 50/00, B29C 64/295, B29C 64/393

(54) **VORRICHTUNG ZUR DURCHFÜHRUNG EINES LASERSINTERVERFAHRENS**
DEVICE FOR PERFORMING A LASER SINTERING METHOD
DISPOSITIF D'EXÉCUTION D'UN PROCÉDÉ DE FRITTAGE AU LASER

(30) Priorität: 21.03.2016 DE 102016105172
(43) Veröffentlichungstag der Anmeldung: 25.10.2017
(73) Patentinhaber: cirp GmbH, 71296 Heimsheim (DE)
(72) Erfinder: BODRY, Bernhard, 71229 Leonberg (DE)
(74) Vertreter: Wacker, Jost Oliver

(56) Entgegenhaltungen:
- DE-A1-102014 208 768
- US-A1- 2011 042 031
- US-A1- 2011 061 591
- US-A1- 2015 165 681

## Beschreibung

Die Erfindung betrifft eine Vorrichtung zur generativen Herstellung eines dreidimensionalen Objekts in einem selektiven Lasersinter-Prozess gemäss Anspruch 1. Das korrespondierende Verfahren sieht dabei in einem ersten Schritt vor, dass an einer Oberfläche eines in einer Werkstoffaufnahme aufgenommenen Pulverbettes eine zusätzliche Pulverschicht eines pulverförmigen Werkstoffes verteilt wird. Der Werkstoff kann dabei insbesondere durch einen thermoplastischen Kunststoff, wie insbesondere Polystyrol, Polyamid oder PEEK gebildet sein. In einem zweiten Schritt wird an dieser zusätzlichen Pulverschicht eine Temperatur innerhalb eines gewünschten Temperaturbereichs eingestellt. In einem dritten Schritt wird dann ein Hochenergiestrahl, wie insbesondere ein Laserstrahl auf wenigstens einen vorbestimmten Bereich der Oberfläche gerichtet. Durch den Hochenergiestrahl wird der in dem betreffenden Bereich angeordnete pulverförmigen Werkstoff geschmolzen und zu einer zusammenhängenden beziehungsweise integralen Schicht verfestigt. Hiernach wird in einem vierten Schritt das Pulverbett um eine vorbestimmte Schichtdicke abgesenkt. Diese vier Schritte werden anschließend so lange wiederholt, bis das vorgegebene dreidimensionale Objekt fertiggestellt ist. Bei jedem Durchlauf verbindet sich dabei der in der jeweils aktuellen Pulverschicht geschmolzene Werkstoff mit der jeweils zuvor hergestellten integralen Schicht. Dabei werden an jeder aufgetragenen Pulverschicht mehrere über die Oberfläche verteilte Temperaturen ermittelt. Aus diesen gemessenen Temperaturen wird dann ein Temperaturverteilungsmodell erstellt und in einer Qualitätsüberwachungsanordnung gespeichert und gegebenenfalls durch diese weiter verarbeitet. Hierdurch kann für jede während eines Herstellungsprozesses verfestigte Schicht des betreffenden Objektes die Temperaturverteilung während der Herstellung überprüft werden. Auf diese Weise kann das gesamte Objekt auch im Nachhinein dahingehend geprüft werden, ob alle Objektbereiche in einem geeigneten Temperaturbereich hergestellt worden sind. Bei der gleichzeitigen Herstellung von Prüfkörpern kann dabei zudem eine Prüfung dahingehend erfolgen, ob der Prüfkörper gegenüber dem zugeordneten Objektabschnitt innerhalb eines vergleichbaren Temperaturbereichs hergestellt worden ist und somit auch die bei der Materialprüfung des Prüfkörpers festgestellten Materialeigenschaften auf den betreffenden Objektabschnitt übertragen werden können.

Hierzu dient eine Vorrichtung zur generativen Herstellung eines dreidimensionalen Objektes in einem selektiven Lasersinter-Prozess. Diese weist eine Werkstoffaufnahme auf, die in einer Prozesskammer angeordnet ist und dabei nach unten durch eine höhenverstellbare Plattform begrenzt ist. Die Werkstoffaufnahme dient dabei zur Aufnahme eines Pulverbettes, das durch einen pulverförmigen Werkstoff gebildet ist. Ferner weist die Vorrichtung eine Zuführungseinrichtung auf, mittels der an einer Oberfläche des Pulverbettes wiederkehrend eine jeweils zusätzliche Pulverschicht aufgebracht werden kann. Zudem ist eine Strahlungseinrichtung vorgesehen, mittels der ein Hochenergiestrahl, insbesondere in der Form eines Laserstrahls, generiert werden kann. Mittels diesem kann das Pulverbett über dessen Oberfläche mit Wärmeenergie beaufschlagt werden, um den pulverförmigen Werkstoff wiederkehrend in jeweils vorbestimmten Bereichen durch Schmelzen und Sintern zu verfestigen. Zur Erwärmung des Werkstoffes ist ferner eine Heizeinrichtung vorgesehen, die vorzugsweise mehrere separat steuerbare Heizabschnitte aufweist. Zudem weist die Vorrichtung einen Wärmebilddetektor auf, der zur quasikontinuierlichen Messung mehrerer über die Oberfläche verteilter Temperaturen dient. Dabei ist der Wärmebilddetektor mit einer Qualitätsüberwachungselektronik verbunden, die über den Lasersinter-Prozess hinweg ein Inline-Temperaturverteilungsmodell erstellt, das aus einer Vielzahl von einzelnen Temperaturverteilungsmodellen besteht und auf den ermittelten Temperaturmesswerten basiert. Hierbei setzt sich das Inline-Temperaturverteilungsmodell aus zeitlich hintereinander liegenden Temperaturverteilungsmodellen zusammen, die über den Herstellungsprozess hinweg wenigstens phasenweise in kurzen Zeitabständen oder quasikontinuierlich generiert werden. Durch die Verbindung des Wärmebilddetektors mit einer derartigen Qualitätsüberwachungselektronik ist für jedes hergestellte dreidimensionale Objekt eine detaillierte Qualitätsüberwachung möglich. Hierbei kann für jede hergestellte integrale Schicht des Objektes wenigstens ein Temperaturverteilungsmodell aus der Qualitätsüberwachungselektronik abgerufen werden, um eine geeignete Temperaturverteilung während deren Herstellung prüfen zu können.

Aus EP 1 466 718 B1 ist ein Verfahren zur Herstellung eines dreidimensionalen Gegenstands mittels Lasersintern bekannt. Dabei wird ein maschinelles Bilderfassungssystem verwendet, um mehrere Temperaturen der aktuellen oberen Pulverschicht in einem mathematischen Modell zu erfassen und für die Regelung des Herstellungsprozesses zu verwenden. Insbesondere wird hierbei eine Strahlungswärmeausgabe eines Heizers sowie die Energie und Scangeschwindigkeit eines Laserstrahls gesteuert.

Nachteilig an den bekannten Verfahren ist, dass der Nachweis bestimmter Materialeigenschaften der hergestellten Objekte relativ aufwendig ist. Beispielsweise müssen zum Nachweis zugesicherter Materialeigenschaften während der Herstellung der Objekte zusätzliche Prüfkörper mit hergestellt werden, die in entsprechender Ausrichtung benachbart zu bestimmten Objektabschnitten positioniert sind. Nach Herstellung des Objektes werden diese Prüfkörper dann dazu verwendet, um stellvertretend für den jeweils zugeordneten Objektabschnitt gewisse zerstörungsbehaftete Materialprüfungen durchführen zu können. Beispielsweise kann durch entsprechende Zugversuche an den Prüfkörpern eine anzunehmende Zugfestigkeits- oder Elastizitätsmodulverteilung des Objekts ermittelt werden.

Diese Materialprüfungen verursachen jedoch sowohl durch die Hohe Zahl der hierfür benötigten herzustellenden Prüfkörper als auch durch die Materialprüfungen an sich einen sehr hohen Aufwand. Zudem lassen die an den Prüfkörpern durchgeführten Materialprüfungen keine verlässlichen Rückschlüsse auf die Materialeigenschaften der betreffenden Objektabschnitte zu, da es aufgrund der unterschiedlichen Temperaturverteilungen im Herstellungsprozess zu einer gewissen Inhomogenität des Materialaufbaus kommen kann.

DE 10 2013 017 792 A1 beschreibt ein Verfahren und eine Vorrichtung zum Herstellen eines dreidimensionalen Bauteils durch aufeinanderfolgendes schichtweises Verfestigen eines Baumaterials im Elektronenstrahl-, Lasersinter- oder Laserschmelzverfahren. Dabei ist oberhalb einer Bestrahlungsebene ein thermographischer Detektor vorgesehen, der Temperaturprofile der bestrahlten Ebenen erfasst. Auf Basis dieser Temperaturprofile kann der jeweils nachfolgende Bestrahlungsvorgang derart gesteuert werden, dass eine bereichsweise übermäßige Erhitzung des Baumaterials vermieden wird. Die vom thermografischen Detektor erfassten Bilddaten, können zudem über eine Anzeigeeinheit angezeigt werden.

DE 10 2004 017 769 A1 beschreibt ein Verfahren zum Bilden eines dreidimensionalen Objektes durch Lasersintern, bei dem ein Temperaturvisionssystem zur Durchführung von Temperatureinstellungsschritten verwendet wird. Bei diesen Temperatureinstellungsschritten werden mehrere Temperaturen der gegenwärtig oberen Pulverlage abgebildet und zur Einstellung einer Strahlungswärmeabgabe verwendet. Die Strahlungswärmeabgabe erfolgt dabei durch einen in Zonen eingeteilten Heizstrahler.

US 2015/165681 A1 beschreibt eine Vorrichtung zur Herstellung dreidimensionaler Objekte durch Lasersintern, bei der in der Prozesskammer mehrere Heizelemente vorgesehen sind, die über einen zentralen Kontroller gesteuert werden, um eine möglichst gleichmäßige Temperaturverteilung zu erreichen. Dabei kann die Temperaturverteilung an der Pulverschicht und an den Wänden der Prozesskammer mittels einer multispektralen Bilderzeugungsvorrichtung ermittelt werden. Die Steuerung der Heizelemente kann dabei mit Hilfe von hinterlegten Temperaturverteilungsmodellen erfolgen, wodurch eine detaillierte Steuerung des zeitlichen Verlaufs der Temperaturverteilung erzielt werden soll.

US 2011/0061591 A1 beschreibt ein Verfahren zur additiven Herstellung dreidimensionaler Objekte, bei dem ein bandförmiges Ausgangsmaterial aus einer Ausgabeeinrichtung ausgegeben und durch Beaufschlagung mit einem Energiestrahl geschmolzen wird, um auf einer Werkstückauflage das gewünschte Objekt schrittweise zu erzeugen. Dabei ist eine Detektoreinrichtung vorgesehen, mittels der das aufzutragende Material in jedem Schritt hinsichtlich bestimmter Parameter geprüft werden kann. In Abhängigkeit von den durch die Detektoreinrichtungen festgestellten Parametern kann wenigstens eine Komponente des Herstellungsapparates über eine elektronische Steuerung verändert werden.

US 2011/042031 A1 zeigt eine Vorrichtung zum Lasersintern, bei der neben einem ersten Erhitzer zum zeitweiligen Aufschmelzen eines Substrates wenigstens ein zweiter Erhitzer zur Erzeugung einer gewünschten Temperaturverteilung in der Prozesskammer vorgesehen ist. Die zweiten Erhitzer können dabei beispielsweise an der Kammerwand oder auf dem Substrat positioniert sein.

De 102014208768 A1 beschreibt ein Verfahren und eine Vorrichtung zur Qualitätssicherung eines Bauteils während dessen Herstellung mittels eines generativen Fertigungsverfahrens. Dabei ist vorgesehen, dass ein Fertigungsprozess abgebrochen werden kann, wenn mit Hilfe einer Thermografieeinrichtung und einer Auswerteinrichtung eine Fehlerbehaftung des hergestellten Bauteils festgestellt wird.

Die Aufgabe der Erfindung ist es, bei einer gattungsgemäßen Herstellung eines dreidimensionalen Objekts durch Lasersintern die genannten Nachteile zu vermeiden und eine einfache, zuverlässige und komfortable Materialprüfung zu ermöglichen.

Diese Aufgabe wird durch eine Vorrichtung mit den Merkmalen des Anspruchs 1 gelöst. Dabei ist die Qualitätsüberwachungselektronik zusätzlich mit einem innerhalb der Prozesskammer angeordneten Temperaturfühler verbunden, mittels dem eine seitens des Kammergehäuses abgegebenen Wärmestrahlung ermittelt werden kann. Auf diese Weise können Abweichungen bei der Ermittlung der über den Wärmebilddetektor ermittelten Temperaturmesswerte, die auf zusätzliche Wärmestrahlungen der Wände, der Decke und/oder des Bodens des Kammergehäuses zurückzuführen sind, minimiert werden. Hierdurch kann durch die Qualitätssüberwachungselektronik ein Inline-Temperaturverteilungsmodell erstellt werden, das über die Prozessdauer hinweg besonders genau mit dem tatsächlichen Temperaturverlauf an der Oberfläche übereinstimmt. Hierbei ist die Qualitätsüberwachungselektronik mit einer Speichereinheit verbunden, mittels der das jeweils während einer Prozessdauer generierte Inline-Temperaturverteilungsmodell gespeichert werden kann, um es für eine spätere Prüfung abrufen zu können. Die generierten Inline-Temperaturverteilungsmodelle können auf diese Weise jederzeit zur Verfügung gestellt werden, wie beispielsweise zur Erstellung eines Qualitätssicherungsprotokolls eines hergestellten dreidimensionalen Objektes.

Dabei ist es günstig, wenn der Temperaturfühler von einer Lagerfläche des Detektorgehäuses absteht. Auf diese Weise stehen der zusätzliche Temperaturfühler und die von diesem ermittelten Werte direkt der Qualitätsüberwachungselektronik zur Verfügung, wobei der Temperaturfühler zudem bei der Montage der Detektoreinrichtung automatisch auch selbst korrekt am Kammergehäuse positioniert wird.

Ferner ist es günstig, wenn die Qualitätsüberwachungselektronik mit einer Prozesssteuerungselektronik verbunden ist, über die der Lasersinter-Prozess bei festgestellter Überschreitung wenigstens eines vorgegebenen Temperaturgrenzwertes oder eines innerhalb der ermittelten Temperaturen auftretenden maximalen Differenzwertes abgebrochen wird. Ferner kann ein Abbruch beispielsweise auch für den Fall vorgesehen werden, dass sich Temperaturverteilungsmuster ergeben, die als nachteilig erachtet werden beziehungsweise in vorhergehenden Herstellungsprozessen zu Abbrüchen geführt haben. Auf diese Weise kann im Falle eines fehlerhaft hergestellten Objektabschnittes die Herstellung sofort abgebrochen und dadurch eine unnötige Belegung der Vorrichtung sowie ein unnötiger Materialverbrauch vermieden werden.

In einer weiteren vorteilhaften Ausführungsform weist der Wärmebilddetektor ein Array aus Bolometern oder Thermopiles auf, das in einem Detektorgehäuse aufgenommen ist. Hierbei kann der Wärmebilddetektor beispielsweise durch einen handelsüblichen Infrarot-Detektor im mittleren Infrarotbereich gebildet sein. Das Detektorgehäuse ist dabei wiederum an einem Kammergehäuse der Prozesskammer gehalten, wodurch eine stabile Ausrichtung des Wärmebilddetektors auf einen vorgesehenen Arbeitsbereich möglich ist.

Hierbei ist es besonders günstig, wenn das Detektorgehäuse ein Mantelelement aus wärmedämmendem Material aufweist, das beispielsweise aus Teflon oder einem Keramikmaterial bestehen kann. Das Mantelelement umschließt dabei einen Kühlpfad, indem der Wärmebilddetektor und wenigstens Teile der Qualitätsüberwachungselektronik aufgenommen sind und der mit einem Anschluss für eine Kühlfluidleitung, wie insbesondere eine Stickstoffleitung verbunden ist. Auf diese Weise kann sowohl das für den Wärmebilddetektor verwendete Array als auch wenigstens ein Teil der Qualitätsüberwachungselektronik gegenüber einer Wärmestrahlung der Prozesskammer abgeschirmt und durch die Umströmung mit Stickstoff aktiv gekühlt werden. Auf diese Weise kann ein störungsfreier Betrieb des Wärmebilddetektors und der Qualitätsüberwachungselektronik gewährleistet werden.

Dabei ist es zudem vorteilhaft, wenn der Kühlpfad einen Umströmungsabschnitt aufweist, der auf Höhe einer Optikanordnung des Wärmebilddetektors angeordnet ist. Die Optikanordnung kann dabei beispielsweise eine Linse, einen Filter und/oder einen Shutter aufweisen, die an einem Halter angebracht sind. Auf diese Weise können auch die optischen Elemente des Wärmebilddetektors während der Prozessdauer wirksam gekühlt werden.

Dabei ist es günstig, wenn der Kühlpfad eine vor der Optikanordnung positionierte Gehäuseöffnung aufweist, die gegenüber dem übrigen Kühlpfad einen verringerten freien Querschnitt ausbildet. Auf diese Weise kann im Betrieb durch den an der Gehäuseöffnung austretenden Stickstoff eine stabile Sperrströmung erzeugt werden, durch die während eines Herstellungsprozesses eine Beaufschlagung der Optikanordnung mit Stäuben oder sonstigen Partikeln, die in der Prozesskammer aufgewirbelt werden, und/oder ein Beschlagen optischer Elemente in Folge von auftretenden Dämpfen oder Gasen verhindert werden kann. Bei Auswahl eines handelsüblichen Wärmebilddetektors mit sehr kleinen Abmessungen kann dabei auch die Gehäuseöffnung sehr klein ausgebildet werden. Hierdurch wird zum Aufbau einer stabilen Sperrströmung über den Herstellungsprozess hinweg auch lediglich eine geringe Menge des Kühlfluids benötigt.

Vorteilhafterweise ist an der Optikanordnung ein Shutter vorgesehen, mittels dem ein Detektorraum verschließbar ist, in dem der Wärmebilddetektor aufgenommen ist. Hierdurch kann der Wärmebilddetektor im deaktivierten Zustand durch Schließen des Detektorraumes wirksam gegen Verunreinigungen, wie insbesondere durch Staubpartikel geschützt werden. Zudem ermöglicht der Shutter einen guten Schutz des Wärmebilddetektors gegen mechanische Beaufschlagungen während der Vornahme von Wartungsarbeiten oder gegen eine versehentliche Beaufschlagung mit einer Hochenergiestrahlung, wie beispielsweise bei der Kalibrierung eines Lasergenerators.

In den Figuren ist eine beispielhafte Ausführungsform der Erfindung dargestellt. Es zeigen:
- Figur 1: eine teilweise geschnittene Ansicht einer erfindungsgemäßen Vorrichtung,
- Figur 2: eine geschnittene Ansicht einer Detektoreinrichtung,
- Figur 3: eine vergrößerte Ansicht des Details III aus Fig. 2,
- Figur 4: eine perspektivische Ansicht der Detektoreinrichtung gemäß Fig. 2,
- Figur 5: eine perspektivische Ansicht der Anordnung der Detektoreinrichtung gegenüber einer Werkstoffaufnahme und
- Figur 6: ein Darstellungsbeispiel eines mittels der Detektoreinrichtung generierten Temperaturverteilungsmodells.

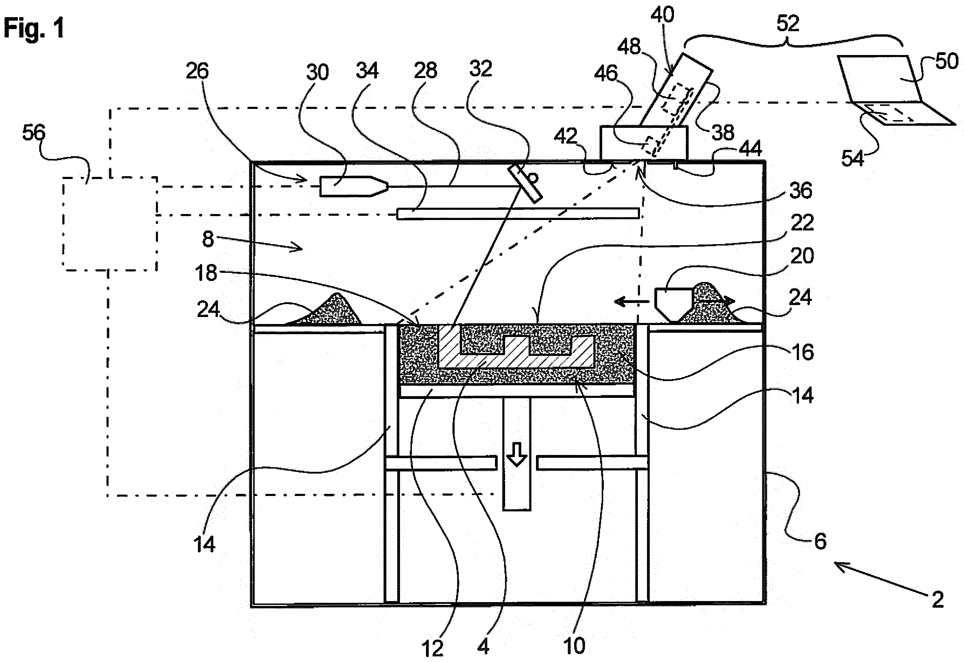

Fig. 1 zeigt eine Vorrichtung 2 zur generativen Herstellung eines dreidimensionalen Objektes 4 im Zuge eines selektiven Lasersinter-Prozesses. Hierzu weist die Vorrichtung 2 eine seitlich und nach oben durch ein Kammergehäuse 6 begrenzte Prozesskammer 8 auf. In Gravitationsrichtung nach unten ist diese Prozesskammer 8 im Wesentlichen durch eine Werkstoffaufnahme 10 begrenzt, die wiederum nach unten durch eine höhenverstellbare Plattform 12 und seitlich durch Wände 14 begrenzt ist.

In der Werkstoffaufnahme 10 ist ein durch einen thermoplastischen Kunststoff gebildeter, pulverförmiger Werkstoff 16 aufgenommen, der ein Pulverbett 18 bildet. Ferner ist eine Zuführungseinrichtung 20 vorgesehen, die zur wiederkehrenden Aufbringung einer jeweiligen zusätzlichen Pulverschicht an einer Oberfläche 22 des Pulverbettes 18 dient. Hierzu nimmt die Zuführungseinrichtung 20 den pulverförmigen Werkstoff 16 von einem seitlichen Vorrat 24 auf und verteilt ihn über die Oberfläche 22. Die Zuführungseinrichtung 20 und der Vorrat 24 können hierzu in jeder bekannten und geeigneten Form ausgebildet sein.

Oberhalb der Werkstoffaufnahme 10 ist eine Strahlungseinrichtung 26 vorgesehen, mittels der ein Hochenergiestrahl 28 auf vorbestimmte Bereiche des Pulverbettes 18 gerichtet werden kann. Hierzu weist die Strahlungseinrichtung 26 beispielsweise einen Lasergenerator 30 sowie einen verstellbaren Spiegel 32 auf.

Zudem ist oberhalb der Werkstoffaufnahme 10 eine Heizeinrichtung 34 angeordnet, die vorzugsweise durch einen Wärmestrahler gebildet ist.

An einer Kammeröffnung 36 des Kammergehäuses 6 ist zudem eine Detektoreinrichtung 40 gehalten. Diese weist ein Detektorgehäuse 38 auf, das über eine Lagerfläche 42 mit dem Kammergehäuse 6 verschraubt ist. Dabei steht von der Lagerfläche 42 ein Temperaturfühler 44 ab, der durch eine Bohrung des Kammergehäuses 6 hindurch in einem wandnahen Bereich in die Prozesskammer 8 hinein ragt.

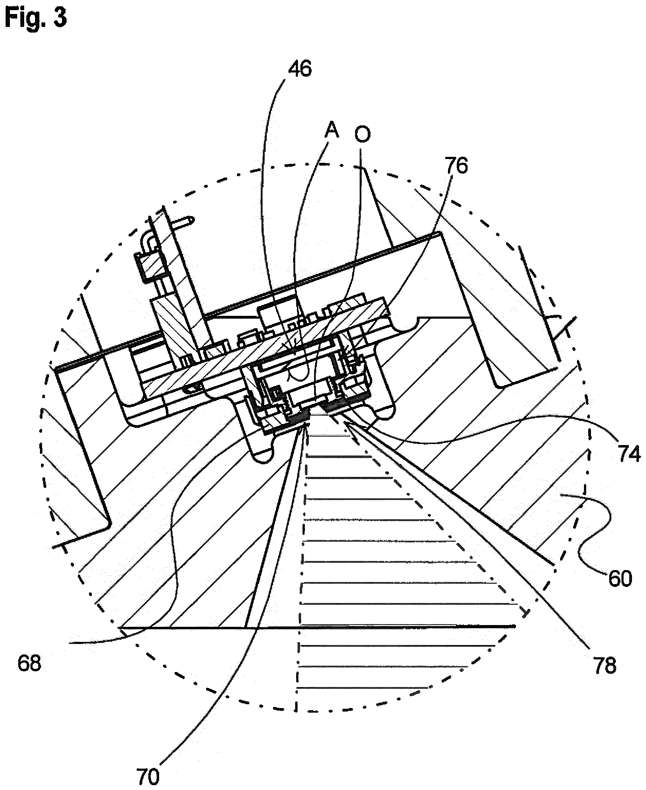

In dem Detektorgehäuse 38 ist ein Wärmebilddetektor 46 aufgenommen, der beispielsweise ein Array A (siehe Fig. 3) aus Bolometern oder Thermopiles aufweist. Dabei kann der Wärmebilddetektor 46 beispielsweise durch einen Infrarot-Detektor im mittleren Infrarotbereich, wie insbesondere durch das Modell Lepton® der Firma FLIR gebildet sein. Der Wärmebilddetektor 46 ist dabei mit einer detektorseitigen Elektronik 48 verbunden, mittels der eine eigenständige Qualitätsüberwachung vorgenommen werden kann. Alternativ oder zusätzlich hierzu kann diese auch wiederum über ein Kabel oder kabellos mit einem separaten Computer 50 verbunden werden. Die detektorseitige Elektronik 48 und der Computer 50 bilden dabei eine Qualitätsüberwachungselektronik 52 in der durch den Wärmebilddetektor 46 generierte Daten verarbeitet und/oder in einer Speichereinheit 54 gespeichert werden können. Alternativ zu der dargestellten Ausführungsform kann die Qualitätsüberwachungselektronik 52 auch vollständig durch die detektorseitige Elektronik 48 gebildet sein. Dabei könnte die Speichereinheit 54 beispielsweise als abnehmbare SD-Speicherkarte ausgebildet werden.

Zudem ist das Qualitätsüberwachungssystem 52 mit einer Prozesssteuerungselektronik 56 verbunden, über die die Strahlungseinrichtung 26, die Heizeinrichtung 34 und/oder die Plattform 12 gesteuert werden können.

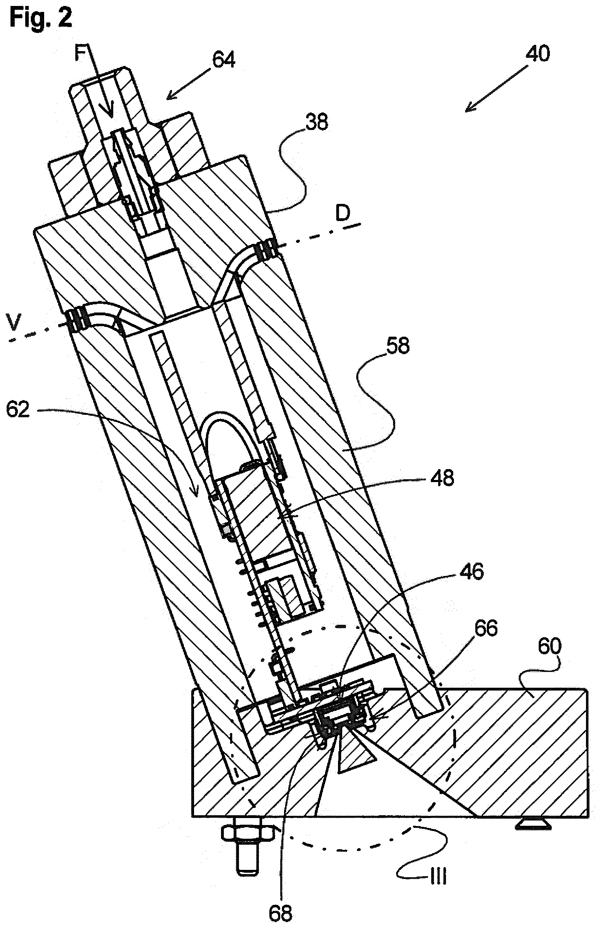

Wie insbesondere aus Fig. 2 zu entnehmen ist, setzt sich das Detektorgehäuse 38 im Wesentlichen aus einem Mantelelement 58 und einer Lagerplatte 60 zusammen, die aus einem wärmedämmenden Material, wie insbesondere Teflon oder einem Keramikmaterial hergestellt sind. Das Mantelelement 58 umschließt dabei einen Kühlpfad 62, in dem die detektorseitige Elektronik 48 aufgenommen ist.

An einem von der Lagerplatte 60 abgewandten Ende ist der Kühlpfad 62 mit einem Anschluss 64 verbunden, über den ein kühlendes Fluid F zur Kühlung der detektorseitigen Elektronik 48 und des Wärmebilddetektors 46 in den Kühlpfad 62 eingeleitet werden kann. Das kühlende Fluid F ist dabei insbesondere wenigstens zum Teil durch Stickstoff, Helium oder Argon gebildet, das beispielsweise über eine Leitung am Anschluss 64 eingeleitet wird. Zudem können an dem Detektorgehäuse 38, wie dargestellt, weitere Öffnungen zur Verlegung einer Datenleitung D, die beispielsweise die detektorseitige Elektronik 48 mit dem Computer 50 verbindet, oder einer elektrischen Versorgungs-Nerbindungsleitung V vorgesehen sein, über die die detektorseitige Elektronik 48 mit elektrischer Energie versorgt und/oder mit der Prozesssteuerungselektronik 56 verbunden werden kann.

An der Lagerplatte 60 bildet der Kühlpfad 62 einen Umströmungsabschnitt 66 aus, der auf Höhe des Wärmebilddetektors 46 und einer diesem zugeordneten Optikanordnung 68 angeordnet ist. Wie aus Fig. 3 zu entnehmen ist, weist die Optikanordnung 68 wenigstens ein optisches Element O, wie insbesondere eine Linse, einen Filter und/oder eine Schutzscheibe auf, das mittels eines Halters 70 vor dem Array A des Wärmebilddetektors 46 positioniert ist. Zudem ist an dem Halter 70 ein Shutter 74 vorgesehen, der zwischen einer Offenstellung und einer Schließstellung verstellt werden kann. Hierdurch kann ein Detektorraum 76, in dem der Wärmebilddetektor 46 mit dem Array A und dem wenigstens einen optischen Element O aufgenommen ist, verschlossen werden, um ihn im deaktivierten Zustand vor Beschädigungen oder Verunreinigungen schützen zu können.

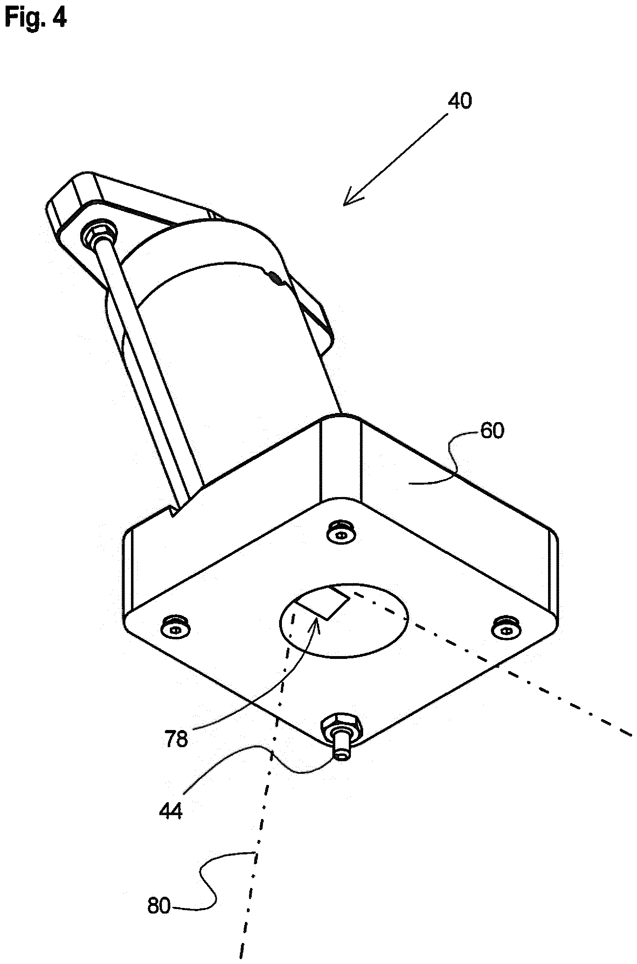

Benachbart zum Shutter 74 bildet die Lagerplatte 60 eine Gehäuseöffnung 78 des Detektorgehäuses 38 aus, über die der Wärmebilddetektor 46 einen Detektionsbereich 80 zur kontaktlosen Messung mehrerer Temperaturen aufbauen kann, wie auch in Fig. 4 dargestellt. Die Gehäuseöffnung 78 weist dabei einen geringeren freien Querschnitt auf als der übrige Kühlpfad 62, so dass beim Durchströmung des Kühlpfades 62 an der Gehäuseöffnung 78 mittels des kühlenden Fluids eine stabile Sperrströmung aufgebaut werden kann, die den Wärmebilddetektor 46 auch bei geöffnetem Shutter 74 wirksam vor Verunreinigungen, wie insbesondere durch Staubpartikel, schützt. Insbesondere bei der Verwendung eines Infrarot-Detektors im mittleren Infrarotbereich, wie insbesondere in Form des Modells Lepton® der Firma FLIR, der sehr kleine Abmessungen aufweist, kann dabei auch die Gehäuseöffnung 78 sehr klein ausgebildet werden. Hierdurch wird zum Aufbau der stabilen Sperrströmung lediglich eine geringe Menge des Kühlfluids benötigt

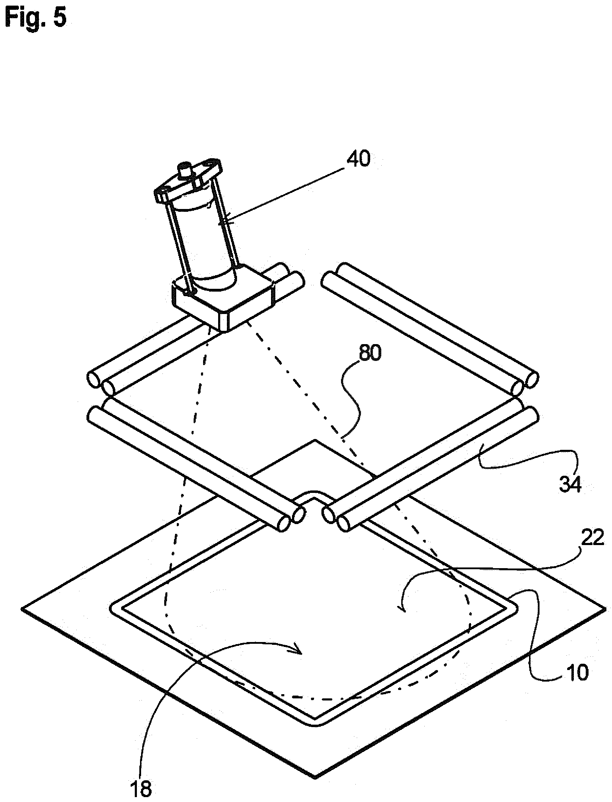

Wie insbesondere aus Fig. 5 zu entnehmen ist, ist der Detektionsbereich 80 auf die Oberfläche 22 des Pulverbettes 18 in der Werkstoffaufnahme 10 gerichtet. Hierdurch können während des Lasersinter-Prozesses über den Wärmebilddetektor 46 mehrere über die Oberfläche 22 des Pulverbettes 18 verteilte temperaturabhängige Messwerte generiert und an die Qualitätsüberwachungselektronik 50 signalisiert werden. Diese generiert dann auf Basis der zu einem bestimmten Zeitpunkt signalisierten Messwerte ein mathematisches Temperaturverteilungsmodell TM der gesamten Oberfläche 22 für diesen Zeitpunkt und hinterlegt diesen in der Speichereinheit 54.

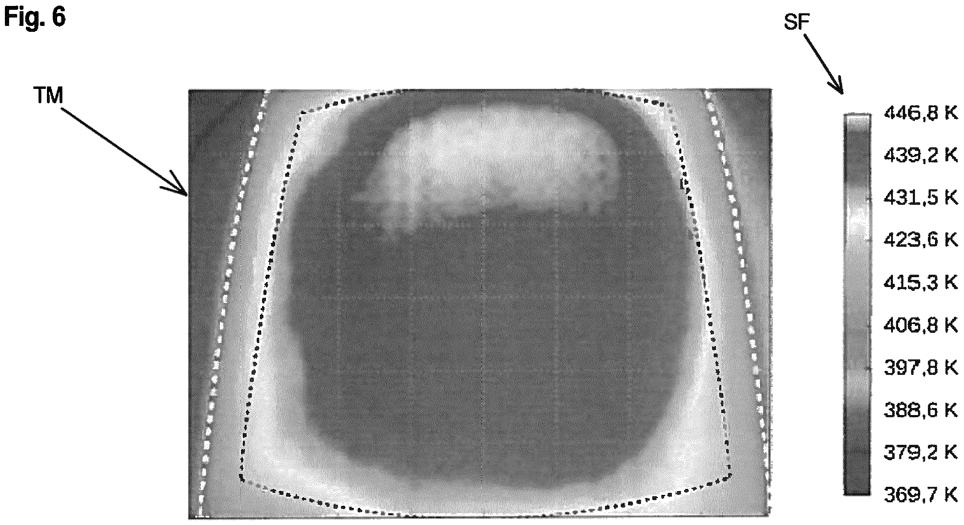

Wie aus dem in Fig. 6 gezeigten Darstellungsbeispiel eines solchen Temperaturverteilungsmodells TM zu entnehmen ist, können dabei die für die einzelnen Positionspunkte der Oberfläche 22 ermittelten beziehungsweise errechneten Temperaturen durch verschiedene Farbwerte einer Farbskale SF wiedergegeben werden.

Das Verfahren zur generativen Herstellung des dreidimensionalen Objektes läuft dabei wie folgt ab:
In einem ersten Schritt wird an der Oberfläche 22 des gemäß Fig. 1 in der Werkstoffaufnahme 10 aufgenommenen Pulverbettes 18 eine zusätzliche Pulverschicht des pulverförmigen Werkstoffes 16 verteilt. Anschließend wird in einem zweiten Schritt an dieser zusätzlichen Pulverschicht eine Temperatur innerhalb eines gewünschten Temperaturbereichs eingestellt. Hierzu wird die Heizeinrichtung 34 über die Prozesssteuerungselektronik 56 aktiviert und geregelt.

Zudem ist die Detektoreinrichtung 40 während des Herstellungsprozesses vorzugsweise durchgehend aktiviert, die im Detektionsbereich 80 verschiedene über die Oberfläche 22 der neu aufgetragenen Pulverschicht verteilte Temperaturen erfasst und an die detektorseitige Elektronik 48 signalisiert. Um hierbei besonders genaue Temperaturwerte der Oberfläche 22 zu erhalten, werden die vom Wärmebilddetektor 46 signalisierten Temperaturmesswerte mit Messwerten verrechnet, die vom Temperaturfühler 44 an die Qualitätsüberwachungselektronik 52 beziehungsweise die detektorseitige Elektronik 48 signalisiert werden. Dabei werden die Anteile der Wärmestrahlung, die auf eine Erwärmung der Decke und der Wände des Kammergehäuses 6 zurückgehen, aus der vom Wärmebilddetektor 46 ermittelten Wärmestrahlung herausgerechnet, um für die weitere Verarbeitung lediglich die von der Oberfläche 22 ausgehende Wärmestrahlung heranziehen zu können. Des Weiteren kann während der Aktivierung der Heizeinrichtung 34 beispielsweise über die Prozesssteuerungselektronik 56 auch die abgegebene Heizleistung der Heizeinrichtung 34 ermittelt und die daraus resultierende Wärmestrahlung mit den seitens des Wärmebilddetektors 46 ermittelten Werten verrechnet werden.

Auf Basis dieser signalisierten und gegebenenfalls korrigierten Temperaturmesswerte erstellt die Qualitätsüberwachungselektronik 52 das mathematische Temperaturverteilungsmodell TM des betreffenden Zeitpunktes und speichert diesen in der Speichereinheit 54 ab. Zudem kann das Temperaturverteilungsmodell TM gemäß Figur 6 in einer insbesondere farbigen Darstellung angezeigt werden. Die Erfassung beziehungsweises Weiterleitung der Temperaturmesswerte und die Weiterverarbeitung zu dem jeweils aktuellen Temperaturverteilungsmodell TM erfolgt in einer derartigen Aufwärmphase einer neu aufgetragenen Pulverschicht und/oder in der anschließenden Phase bis zur Aktivierung der Strahlungseinrichtung 26 mit einer Frequenz von wenigstens 7, vorzugsweise 9 Herz und somit quasikontinuierlich.

Sobald die Temperaturen der Oberfläche 22 in einem gewünschten Temperaturbereich liegen, wird dann in einem dritten Schritt die selektive Belichtung des Pulverbettes 18 gestartet. Dabei fährt der Hochenergiestrahl 28 beziehungsweise der Laserstrahl über einen vorbestimmten Bereich der Oberfläche 22 und sorgt in diesem für die Verfestigung des Werkstoffes 16 durch Schmelzen und Sintern. Während dieser Belichtungsphase werden die wiederkehrenden Temperaturmessungen an der Oberfläche 22 durch die Detektoreinrichtung 40 und die Generierung und Abspeicherung der Temperaturverteilungsmodelle TM durch die Qualitätsüberwachungselektronik 52 fortgesetzt, wobei gegebenenfalls größere Zeitabstände zwischen den Messungen und den hinterlegten Temperaturverteilungsmodellen TM gewählt werden können.

Nach Abschluss der Belichtungsphase wird in einem vierten Schritt die Plattform 12 und damit das Pulverbett 18 um eine vorbestimmte Schichtdicke abgesenkt. Anschließend werden die beschrieben Schritte so lange wiederholt, bis das vorgegebene dreidimensionale Objekt 4 fertiggestellt ist. Bei jedem Durchlauf verbindet sich dabei der in der jeweils aktuellen Pulverschicht geschmolzene Werkstoff 16 mit der jeweils zuvor hergestellten integralen Schicht.

Falls während des Herstellungsprozesses an der Oberfläche 22 Temperaturen ermittelt werden, die einen vorgegebenen Grenzwert übersteigen, wird die Vorrichtung 2 über die Prozesssteuerungselektronik 56 abgebrochen. Ferner kann ein solcher automatisierter Prozessabbruch vorgesehen werden, falls innerhalb der an der Oberfläche 22 ermittelten Temperaturwerte ein maximaler Differenzwert überschritten wird.

Zudem ist es möglich, die mittels der Detektoreinrichtung 40 ermittelten Temperaturmesswerte zusätzlich dafür zu verwenden, um über die Prozesssteuerungselektronik 56 eine bereichsweise Temperaturanpassung an der Oberfläche 22 vorzunehmen. Hierbei wäre es beispielsweise möglich, Bereiche mit einer zu niedrigen Temperatur mittels der Strahlungseinrichtung 26 oder mittels der Heizeinrichtung 34, die hierzu mehrere separat steuerbare Heizabschnitte aufweisen sollte, zusätzlich zu erwärmen.

In jedem Fall steht dabei nach Abschluss der Herstellung des jeweiligen dreidimensionalen Objektes 4, anhand der von der Qualitätsüberwachungselektronik 52 hinterlegten Temperaturverteilungsmodelle TM eine genaue Dokumentation der über den Herstellungsprozess hinweg aufgetretenen Temperaturverteilungen in Form eines Inline-Temperaturverteilungsmodells zur Verfügung. Diese kann somit beispielsweise für einen konkreten Qualitätsnachweis oder ein generelles Qualitätsmanagement verwendet werden. Im Falle einer parallelen Herstellung eines Prüfkörpers (nicht dargestellt) zu dem dreidimensionalen Objekt 4 können die Temperaturverteilungsmodelle TM beispielsweise für den Nachweis verwendet werden, dass ein dem Prüfkörper zugeordneter Abschnitt des hergestellten Objekte 4 über dessen Herstellungsverlauf hinweg in einem vergleichbaren Temperaturbereich lag.

Die Vorrichtung 2 und das beschriebene Verfahren ermöglichen somit insgesamt eine bessere Qualitätsüberwachung des selektiven Lasersinter-Prozesses sowie eine präzisere Einstellung der an der Oberfläche 22 des Pulverbettes 18 auftretenden Temperaturen.

## Patentansprüche

1. Vorrichtung (2) zur generativen Herstellung eines dreidimensionalen Objektes (4) in einem selektiven Lasersinter-Prozess
mit einer in einer Prozesskammer (8) angeordneten Werkstoffaufnahme (10), die nach unten durch eine höhenverstellbare Plattform (12) begrenzt ist und zur Aufnahme eines durch einen pulverförmigen Werkstoff (16) gebildeten Pulverbettes (18) dient,
einer Zuführungseinrichtung (20) zur wiederkehrenden Aufbringung einer zusätzlichen Pulverschicht an einer Oberfläche (22) des Pulverbettes (18),
einer Strahlungseinrichtung (26) zur Generierung eines Hochenergiestrahles (28), mittels dem das Pulverbett (18) über die Oberfläche (22) beaufschlagbar ist, um den Werkstoff (16) wiederkehrend bereichsweise zu verfestigen,
einer Heizeinrichtung (24) zur Erwärmung des Werkstoffes (16) und
einem Wärmebilddetektor (46) zur Messung mehrerer über die Oberfläche (22) verteilter Temperaturen, wobei der Wärmebilddetektor (46) mit einer Qualitätsüberwachungselektronik (52) verbunden ist, die über den Lasersinter-Prozess hinweg auf Basis der ermittelten Temperaturen ein Inline-Temperaturverteilungsmodell erstellt,
**dadurch gekennzeichnet, dass** die Qualitätsüberwachungselektronik (52) ferner mit einem innerhalb der Prozesskammer (8) angeordneten Temperaturfühler (44) zur Ermittlung einer seitens des Kammergehäuses (6) abgegebenen Wärmestrahlung verbunden ist und mit einer Speichereinheit (54) zur abrufbaren Speicherung des jeweils ermittelten Inline-Temperaturverteilungsmodells verbunden ist.

2. Vorrichtung nach Anspruch 1, **dadurch gekennzeichnet, dass** der Temperaturfühler (44) von einer Lagerfläche (42) des Detektorgehäuses (38) absteht

3. Vorrichtung nach Anspruch 1 oder 2, **dadurch gekennzeichnet, dass** die Qualitätsüberwachungselektronik (52) mit einer Prozesssteuerungselektronik (56) verbindbar ist, über die der Lasersinter-Prozess bei festgestellter Überschreitung wenigstens eines vorgegebenen Temperaturgrenzwertes oder eines maximalen Differenzwertes innerhalb der ermittelten Temperaturen oder bei Detektion eines vordefinierten Temperaturverteilungsmusters abschaltbar ist.

4. Vorrichtung nach einem der Ansprüche 1 bis 3, **dadurch gekennzeichnet, dass** der Wärmebilddetektor (46) ein Array (A) aus Bolometern oder Thermopiles aufweist, das in einem Detektorgehäuse (38) aufgenommen ist, das wiederum an einem Kammergehäuse (6) der Prozesskammer (8) gehalten ist.

5. Vorrichtung nach Anspruch 4, **dadurch gekennzeichnet, dass** das Detektorgehäuse (38) ein Mantelelement (58) aus wärmedämmendem Material aufweist, das einen Kühlpfad (62) umschließt, in dem der Wärmebilddetektor (46) aufgenommen ist und der mit einem Anschluss (64) für eine Kühlfluidleitung verbunden ist.

6. Vorrichtung nach Anspruch 5, **dadurch gekennzeichnet, dass** der Kühlpfad (62) einen Umströmungsabschnitt (66) aufweist, der auf Höhe einer Optikanordnung (68) des Wärmebilddetektors (46) angeordnet ist.

7. Vorrichtung nach Anspruch 6, **dadurch gekennzeichnet, dass** der Kühlpfad (62) eine vor der Optikanordnung (68) positionierte Gehäuseöffnung (78) aufweist, die gegenüber dem übrigen Kühlpfad (62) einen verringerten freien Querschnitt ausbildet.

8. Vorrichtung nach Anspruch 6 oder 7, **dadurch gekennzeichnet, dass** an der Optikanordnung (68) ein Shutter (74) vorgesehen ist, mittels dem ein Detektorraum (76), in dem der Wärmebilddetektor (46) aufgenommen ist, verschließbar ist.

## Claims

1. Device (2) for generative production of a three-dimensional object (4) in a selective laser sintering process
comprising a material receiver (10) arranged in a process chamber (8), which is delimited downwards by a height-adjustable platform (12) and serves to receive a powder bed (18) for receiving a material (16) in powder form,
a delivery device (20) for recurrent delivery of an additional powder layer to a surface (22) of the powder bed (18),
a radiation device (26) for generating a high-energy beam (28), by means of which the powder bed (18) can be imposed over the surface (22) in order to stabilise the material (16) recurrently section by section,
a heating device (24) for heating the material (16), and
a thermal image detector (46) for measuring several temperatures divided over the surface (22), wherein the thermal image detector (46) is connected to a quality monitoring electronics unit (52), which, beyond the laser sintering process, generates an inline temperature distribution model on the basis of the temperatures which are detected,
**characterised in that** the quality monitoring electronics unit (52) is further connected to a temperature sensor (44) arranged inside the process chamber (8) for detecting thermal radiation emitted by the chamber housing (6) and is connected to a memory storage unit (54) for the storage of the inline temperature distribution model which is detected in each case, in such a way that this can be called up.

2. Device according to claim 1, **characterised in that** the temperature sensor (44) projects from a storage surface (42) of the detector housing (38).

3. Device according to claim 1 or 2, **characterised in that** the quality monitoring electronics unit (52) can be connected to a process control electronics unit (56), by means of which the laser sintering process can be switched off in the event of the detection of the exceeding of at least one specified temperature limit value or of a maximum differential value within the temperatures detected or in the event of the detection of a predefined temperature distribution pattern.

4. Device according to any one of claims 1 to 3, **characterised in that** the thermal imaging detector (46) comprises an array (A) of bolometers or thermopiles, accommodated in a detector housing (38), which in turn is held in a chamber housing (6) of the process chamber (8).

5. Device according to claim 4, **characterised in that** the detector housing (38) comprises a casing element (58) made of thermally insulating material, which surrounds a cooling path (62), in which the thermal imaging detector (46) is accommodated, and is connected to a connection (64) for a cooling fluid line.

6. Device according to claim 5, **characterised in that** the cooling path (62) comprises a flow-around section (66), which is arranged at the height of a lens arrangement (68) of the thermal imaging detector (46).

7. Device according to claim 6, **characterised in that** the cooling path (62) comprises a housing opening (78) positioned above the lens arrangement (68), which exhibits a reduced free cross-section in relation to the remaining cooling path (62).

8. Device according to claim 6 or 7, **characterised in that** a shutter (74) is provided at the lens arrangement (68), by means of which a detector chamber (76) can be closed, in which the thermal imaging detector (46) is accommodated.

## Revendications

1. Dispositif (2) pour la fabrication générative d'un objet tridimensionnel (4) dans un procédé sélectif de frittage au laser
comprenant un logement de matériau (10) agencé dans une chambre de procédé (8), qui est délimitée au niveau du dessous par une plateforme (12) réglable en hauteur et sert à recevoir un lit de poudre (18) formé par un matériau poudreux (16),
un appareil d'alimentation (20) pour l'application répétitive d'une couche de poudre supplémentaire sur une surface (22) du lit de poudre (18),
un appareil de rayonnement (26) pour générer un rayonnement de haute énergie (28), au moyen duquel le lit de poudre (18) peut être soumis sur la surface (22) afin de solidifier par endroit de manière répétitive le matériau (16),
un appareil chauffant (24) pour chauffer le matériau (16) et
un détecteur d'image thermique (46) pour mesurer plusieurs températures réparties sur la surface (22), le détecteur d'image thermique (46) étant connecté avec une électronique de surveillance de qualité (52), qui établit un modèle de répartition de température en ligne sur la base des températures détectées pendant le procédé de frittage au laser,
**caractérisé en ce que** l'électronique de surveillance de qualité (52) est en outre connectée avec une sonde de température (44) agencée à l'intérieur de la chambre de procédé (8) pour détecter un rayonnement de chaleur fourni à un côté du boîtier de chambre (6) et est connectée avec une unité de stockage (54) pour le stockage de manière lisible de chacun des modèles détectés de répartition de températures en ligne.

2. Dispositif selon la revendication 1, **caractérisé en ce que** la sonde de température (44) dépasse d'une face de support (42) du boîtier de détecteur (38).

3. Dispositif selon la revendication 1 ou 2, **caractérisé en ce que**, l'électronique de surveillance de qualité (52) peut être connectée à une électronique de commande de procédé (56), par laquelle le procédé de frittage au laser peut être interrompu lors d'un dépassement constaté d'au moins d'une valeur limite de température prédéterminée ou d'une valeur de différence maximale au sein des températures détectées ou lors de la détection d'un profil de répartition de température prédéfini.

4. Dispositif selon l'une des revendications 1 à 3, **caractérisé en ce que** le détecteur d'image thermique (46) comprend un réseau (A) de bolomètres ou de thermopiles, qui est logé dans un boîtier de détecteur (38), qui est maintenu d'autre part sur un boîtier de chambre (6) de la chambre de procédé (8).

5. Dispositif selon la revendication 4, **caractérisé en ce que** le boîtier de détecteur (38) comprend un élément de manchon (58) constitué d'un matériau isolant thermiquement qui entoure un chemin de refroidissement (62), dans lequel le détecteur d'image thermique (46) est logé et est relié avec un raccord (64) pour un conduit de fluide de refroidissement.

6. Dispositif selon la revendication 5, **caractérisé en ce que** le chemin de refroidissement (62) comprend une partie d'écoulement de contournement (66), qui est agencé sur la hauteur d'un agencement optique (68) du détecteur d'image thermique (46).

7. Dispositif selon la revendication 6, **caractérisé en ce que** le chemin de refroidissement (62) comprend une ouverture de boîtier (78) positionnée devant l'agencement optique (68), l'ouverture de boîtier formant une section transversale libre se rétrécissant par rapport au chemin de refroidissement (62) restant.

8. Dispositif selon la revendication 6 ou 7, **caractérisé en ce que**, sur l'agencement optique (68), il est prévu un obturateur (74), au moyen duquel un espace de détection (76) peut être fermé, espace dans lequel le détecteur d'image thermique (46) est logé.
